# EUROPÄISCHE PATENTSCHRIFT

(11) **EP 0 639 128 B1**
(45) Veröffentlichungstag und Bekanntmachung des Hinweises auf die Patenterteilung: **14.08.1996**
(21) Anmeldenummer: 93909889.3
(22) Anmeldetag: 04.05.1993
(51) Int. Cl.: B60T 8/26, B60T 8/34

(54) **HYDRAULISCHE BREMSANLAGE MIT SCHLUPFREGELUNG**
HYDRAULIC BRAKE WITH DRIVE SLIP CONTROL
FREIN HYDRAULIQUE AVEC REGULATION ANTIPATINAGE

(30) Priorität: 09.05.1992 DE 4215280
(43) Veröffentlichungstag der Anmeldung: 22.02.1995
(73) Patentinhaber: ITT Automotive Europe GmbH, 60488 Frankfurt (DE)
(72) Erfinder: BURGDORF, Jochen, D-6050 Offenbach-Rumpenheim (DE)
(86) Internationale Anmeldenummer: EP9301085
(87) Internationale Veröffentlichungsnummer: WO9323271

(56) Entgegenhaltungen:
- EP-A- 0 285 253
- EP-A- 0 336 278
- WO-A-90/15738
- DE-A- 3 737 316
- DE-A- 4 036 940
- FR-A- 2 667 557
- PATENT ABSTRACTS OF JAPAN vol. 13, no. 512 (M-893)(3860) 16. November 1989

## Beschreibung

Die Erfindung betrifft eine hydraulische Bremsanlage mit Schlupfregelung nach dem Oberbegriff des Anspruchs 1.

Bei bekannten Bremsanlagen dieser Art, z.B. DE-OS 33 23 402, wird mit Hilfe von elektromagnetisch betätigbaren Einlaß- und Auslaßventilen der Bremsdruck in Abhängigkeit vom Raddrehverhalten beeinflußt, um einerseits ein Blockieren der Räder bei übermäßiger Bremsenbetätigung zu verhindern und um andererseits die Bremskraftverteilung auf die Vorder- und Hinterräder der jeweiligen Bremssituation anzupassen. Durch Steuerung der Bremskraftverteilung lassen sich die Auswirkungen eines unterschiedlichen Beladungszustandes des Fahrzeuges unter statischer bzw. dynamischer Achslastverteilung beeinflussen. Zur Erhaltung der Fahrstabilität muß dabei stets sichergestellt sein, daß keinesfalls ein Blockieren der Hinterräder vor dem Blockieren der Vorderräder einsetzt.

Zur Steuerung der Bremskraftverteilung sind nach der vorgenannten DE-OS in die Hauptdruckleitungen, die zu den Hinterrädern führen, Einlaßventile als in der Ruhestellung sperrende Mehrwegeventile eingefügt. Die zu den Vorderrädern führenden Einlaßventile sind dagegen in ihrer Ruhestellung für den Durchfluß von Druckmittel offen. Durch getaktetes Ansteuern der Ventile wird erreicht, daß sich an den Hinterrädern ein Bremsschlupf einstellt, der stets kleiner ist als an den Vorderrädern. Auf diese Weise soll ein hoher Beitrag der Hinterräder zur Abbremsung erreicht und gleichzeitig eine Überbremsung der Hinterräder verhindert werden.

Nach dieser Offenlegungsschrift werden die Einlaß- und die Auslaßventile, die Radsensoren, die Auswerteelektronik und das Hilfsdruckversorgungssystem sowohl zur Steuerung der Bremskraftverteilung als auch zur Blockierschutzregelung verwendet, mit dem Nachteil, daß bei einer Funktionsstörung in der die Einlaßventile der Hinterachsbremse aktivierenden Elektrik oder Elektronik keinerlei Bremswirkung an der Hinterachse zustandekommt.

Es ist auch bereits aus der DE-OS 34 40 541 eine Bremsanlage bekannt, die ausschließlich zur elektronischen Steuerung der Bremskraftverteilung mit Radventilen ausgerüstet ist. Es sind daher nur in den zu den Hinterradbremsen führenden Bremsleitungen Radventile, nämlich in der Ruhestellung sperrende Magnetventile, eingefügt. Parallel zu diesen Radventilen ist ein Bremskraftregler geschaltet, über den bei Bremsbetätigung Bremsdruck zu den Hinterradbremsen gelangt, der auf den Mindestdruck, in Abhängigkeit von der jeweiligen Abbremsung bei idealer Bremskraftverteilung, abgestimmt ist. Durch Ansteuerung der Radventile wird dieser Bremsdruck auf den höheren, der momentanen Situation optimal angepaßten Wert angehoben. Dieser Anordnung liegt die Überlegung zugrunde, daß auch bei einem Stromausfall oder einem Ventildefekt über den Bremskraftregler ein Mindestbremsdruck zu den Hinterradbremsen gelangt, so daß auch bei einem solchen Störfall die Hinterachse einen Beitrag zur Abbremsung des Fahrzeuges leisten kann. Diese Bremsanlage hat jedoch den Nachteil, daß der Beitrag des Bremskraftverteilers hinter dem optimalen, theoretisch möglichen Wert zurückbleibt. Andererseits kann in bestimmten Bremssituationen der über den Parallelzweig übertragene Druck bereits zum Blockieren führen.

Aus der DE-A-40 36 940 ist eine Bremsanlage für ein Fahrzeug bekannt geworden. Bei dieser hydraulischen Bremsanlage für ein Fahrzeug mit zumindest zwei Hauptdruckleitungen, über welche ein Hauptbremszylinder mit den Radbremszylindern verbunden ist, ist in jeder Hauptdruckleitung ein Druckmodulationsventil zum Verschließen der Hauptdruckleitungen eingeschaltet. Jede Hauptdruckleitung weist eine Hilfsdruckpumpe in Umgehung des Druckmodulationsventils auf. Dabei sperrt ein Druckmodulationsventil an der Hinterachse im stromlosen Zustand bzw. bei fehlendem Druckaufbau in einer Hauptdruckleitung diese Hauptdruckleitung und ist mit einer Steuereinheit zum gepulsten Öffnen bei Druckaufbau in der Bremsdruckleitung verbunden. Ferner ist ein Druckventil und ein Rückschlagventil in einem Bypass zu dem gepulsten Druckmodulationsventil der Hinterachse angeordnet. Bei einem Defekt des in die Hauptdruckleitung der Hinterradbremse befindlichen und jeweils in seiner Grundstellung geschlossenen Druckmodulationsventil tritt während der Antiblockierregelung an der oder den Hinterradbremsen keine Bremswirkung auf, da das parallel zum Druckmodulationsventil geschaltete Druckventil durch die Wirkung des Pumpendrucks gesperrt ist und die Druckmittelversorgung zur Hinterachsbremse damit unterbricht.

In der DE-A-37 37 316 ist eine schlupfgeregelte hydraulische Kraftfahrzeugbremsanlage beschrieben, die zwei diagonal aufgeteilte Bremskreise und eine nach dem Einspeiseprinzip arbeitende, offene Antiblockierregeleinrichtung aufweist. Den Radbremsen sind Ein- und Auslaßventile vorgeschaltet, die die Funktion von Druckmodulationsventilen während der Antiblockierregelung wahrnehmen. Vor den Druckmodulationsventilen der Hinterradbremsen sind druckabhängig ansteuerbare Bremsdruckverteiler angeordnet, deren druckmindernde bzw. druckbegrenzende Funktion selbständig nur dann wirksam ist, wenn und solange die Radbremse vom Hauptbremszylinder statisch mit Bremsdruck versorgt werden, nicht aber, wenn und solange sie von einer Hilfsdruckversorgungsanlage der Antiblockieranlage dynamisch mit Bremsdruck versorgt werden.

Aus der EP-A-0 285 253 ist bereits eine hydraulische Bremsanlage mit Schlupfregelung hervorgegangen, die über einen hilfskraftunterstützten Hauptzylinder verfügt, an dem über Hauptdruckleitungen Vorder- und Hinderradbremsen angeschlossen sind, die mittels Druckmodulationsventile von den Hauptdruckleitungen des Hauptzylinders sperrbar und bei Bedarf mit einem Reservoir verbindbar sind. Mit dem Reservoir steht gleichfalls eine Pumpe in Verbindung, die mittels einer Druckmittelverzweigung die Kolben der den Druckmitteldurchlaß zu den Radbremsen bestimmenden Trennventilen beaufschlagt. Die Kolben sind gleichfalls entgegen der Wirkung des Pumpendrucks von jeweils in den Radbremsen anstehenden Druck beaufschlagt, so daß in der schlupffreien Normalbremsstellung als auch im Blockierschutzregelfalle die Kolben ihrer Grundstellung verharren, in der die Trennventile die Druckverbindung zwischen dem Hauptzylinder und den Radbremsen geöffnet halten. Sofern kein hydraulischer Druck vom Hauptzylinder auf die Radbremsen und die Kolben einwirkt, vollziehen die Kolben unter Wirkung des Pumpendrucks eine Umkehrbewegung, die zum Schließen der Trennventile führt, so daß eine direkte Verbindung der Druckseite der Pumpe mit den Radbremsen zustande kommt, die zur Regelung des Radschlupfes an den angetriebenen Fahrzeugrädern genutzt werden kann.

Der Erfindung liegt die Aufgabe zugrunde, bei einer Bremsanlage mit Schlupfregelung die Bremskraftausnutzung der Hinterräder zu verbessern, d.h. den Beitrag der Hinterräder zu einer Abbremsung zu erhöhen und gleichzeitig eine hohe Sicherheit gegen Störungen zu gewährleisten. Auch bei Ausfall der Stromversorgung oder bei ähnlichen Defekten soll die Bremsenwirkung der Hinterräder erhalten bleiben. Ein Blockieren der Hinterräder vor dem Blockieren der Vorderräder, das bekanntlich die Fahrstabilität eines Fahrzeuges gefährdet, sollte weiterhin ausgeschlossen sein. Die Bremsanlage soll sich durch kostengünstige und dennoch komfortverbesserte Betriebsweise, insbesondere durch verminderte Ventil- und Pumpengeräusche sowie durch möglichst kleine Pedalpulsationen, auszeichnen.

Diese Aufgabe wird erfindungsgemäß durch die den Patentanspruch 1 kennzeichnenden Merkmale gelöst, wonach an der zur Hinterradbremse führenden Hauptdruckleitung ein in einem Gehäuse beweglicher Kolben eines Druckmittelverschiebeelement angeschlossen ist, das auf einer ersten Stirnfläche vom Druck der Hilfsdruckpumpe zu beaufschlagen ist, wobei auf einer entgegengesetzt zur ersten Stirnfläche gelegenen zweiten Stirnfläche der in der Hinterradbremse herrschende Druck ansteht, wobei der Kolben im Gehäuse eine in Richtung zur Hinterradbremse volumenvergrößernde Grundstellung im Gehäuse aufweist, wobei abhängig vom Hub und Nenndurchmesser der zweiten Stirnfläche am Kolben ein Druckmittelvolumen verdrängt wird, das dem zur schlupffreien Abbremsung der Hinterradbremse erforderlichen Radbremsdruck entspricht, und wobei bei unbetätigten Druckmodulationsventilen eine offene Verbindung zwischen dem Hauptzylinder und den Radbremsen besteht.

Damit ist gewährleistet, daß während der Bremsschlupfregelung das Druckmittelverschiebeelement in Verbindung mit der Hinterradbremse die Regelgeräusche der Pumpe sowie die Pedalpulsation aufnimmt, da das Druckmittelverschiebeelement als Dämpfungsspeicher wirkt. Ferner läßt sich während der Druckmodulation (ABS-Modus) durch Umschichten des Vorderachsbremsdruckes auf den Hinterachsbremsdruck die Wirkung des Bremskraftverteilers überbrücken und bei entsprechender Dimensionierung zum Zwecke der Bremswegverkürzung erhöhen.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen (Fig. 1 bis Fig. 6) näher dargestellt und erläutert werden.

Es zeigen:
- Fig. 1: einen ersten Hydraulikschaltplan von einer schlupfgeregelten Bremskreisdiagonalen mit der erfindungsgemäßen parallelen Anordnung des Druckmittelverschiebeelementes zu einem Bremskraftverteiler,
- Fig. 2: eine weitere Hydraulikschaltung von einem schlupfgeregelten Bremskreis mit Hinterachs-/Vorderachsaufteilung, versehen mit einer weiteren erfindungsgemäßen Variante zur Anordnung bzw. Steuerung des Druckmittelverschiebeelementes und des Bremskraftverteilers,
- Fig. 3: eine Variante zur Hydraulikschaltung der Bremskreisdiagonalen gemäß Fig. 1,
- Fig. 4: eine Schaltungsvariante zu Fig. 2, mit einem Druckmittelverschiebelement und einem Bremskraftverteiler für Vorderachs-/Hinterachsbremskreisaufteilung,
- Fig. 5: ein Schaltungskonzept mit diagonaler Bremskreisaufteilung und hydraulischem Druckmodulationsventil,
- Fig. 6: ein Bremskraftverteilerdiagramm mit zugeordneter Pedalkraftkennlinie.

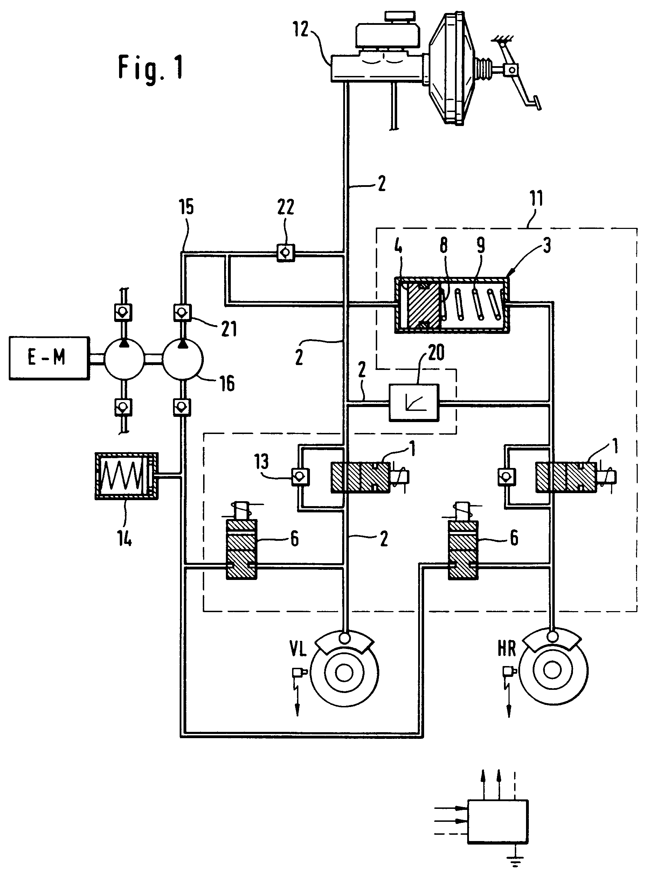

Die Fig. 1 zeigt in vereinfachter, überschaubarer Darstellung exemplarisch die zur Betätigung einer diagonalen Hinterrad- und Vorderradbremse HR,VL erforderlichen Elemente. An einem pedalbetätigbaren Hauptzylinder 12 ist eine zu der Hinterradbremse HR und Vorderradbremse VL führende Hauptdruckleitung 2 angeschlossen. Beide Bremsen VL,HR verfügen jeweils über ein in Grundstellung elektromagnetisch stromlos geöffnetes Druckmodulationsventil 1 (Einlaßventil) sowie parallel dazu jeweils über ein in Richtung des Hauptzylinders 12 öffnendes Rückschlagventil 13. Weiterhin schließt sich zwischen den Radbremsen VL,HR und den Druckmodulationsventilen 1 jeweils ein elektromagnetisch geschlossenes Druckmodulationsventil 6 (Auslaßventil) sowie ein in Strömungsrichtung dem Druckmodulationsventil 6 nachgeschaltetes Reservoir 14 an. Das Reservoir 14 kann entweder als druckloser Nachlaufbehälter am Hauptzylinder 12 oder als Niederdruckspeicher eines geschlossenen Bremsanlagensystems direkt am Druckmittelrücklauf angeschlossen sein, der eine Hilfsdruckpumpe 16 mit Druckmittel versorgt. Die Hilfsdruckleitung 15 ist zwischen dem Hauptzylinder 12 und dem in der Grundstellung stromlos offenen Druckmodulationsventil 1 an die Hauptdruckleitung 2 angeschlossen, während das als Auslaßventil wirksame, in der Grundstellung geschlossene Druckmodulationsventil 6 zwischen dem als Einlaßventil wirksamen, in der Grundstellung geöffneten Druckmodulationsventil 1 und der Hinterradbremse HR an die Hauptdruckleitung 2 angeschlossen ist. Ferner ist stromaufwärts vor dem in der Grundstellung geöffnetem Druckmodulationsventil 1 (Einlaßventil) der Vorderradbremse VL an der Hauptdruckleitung 2 ein Bremskraftverteiler 20 angeschlossen, dessen druckgeregelter Bremskraftverteilerausgang vor dem Druckmodulationsventil 1 (Einlaßventil) der Hinterradbremse HR einmündet. Über diesen Grundaufbau des für eine schlupfgeregelte Bremsanlage erforderlichen Bremskreises hinaus weist dieser wirkungsgemäß parallel zum Bremskraftverteiler 20 geschaltet, ein Druckmittelverschiebeelement 3 auf. Dieses Druckmittelverschiebeelement 3 kann prinzipiell an jeder geeigneten Stelle an der Druckseite der Hilfsdruckpumpe 16 angeschlossen sein, ohne daß sich hierdurch Nachteile für den Betrieb der Anlage ergeben. Das Druckmittelverschiebeelement 3 besteht aus einem Kolben, der in einem Gehäuse 10 abgedichtet und axial beweglich geführt ist. In der abbildungsgemäßen Stellung des Druckmittelverschiebeelementes befindet sich der Kolben unter Kraftwirkung einer Druckfeder 9, in einer zur Hinterradbremse HR volumenvergrößerten Grundstellung. Der Kolben kann zur Einstellung eines gegenüber der Vorderradbremse VL höheren Hinterradbremsdruckes mit einer Kolbenstufe versehen werden. Die mit der größeren Wirkfläche versehene Kolbenstufe ist sodann dem Druck der Hilfsdruckpumpe 16 ausgesetzt. Um bei Betätigung des Hauptzylinders 12 eine unerwünschte Volumenaufnahme und damit eine Hysterese des Bremssystems über die Kammer des Druckmittelverschiebeelementes 3 zu verhindern, befindet sich dem Druckmittelverschiebeelement 3 vorangeschaltet ein in Richtung des Druckmittelverschiebeelementes 3 sperrendes Rückschlagventil 22. Das Druckmittelverschiebeelement 3 kann gemeinsam mit allen Druckmodulationsventilen 1,6 und den Rückschlagventilen 13 in einem gemeinsamen Ventilgehäuseblock 11 vereinigt oder bei Bedarf auch teilweise modular am bestehenden Ventilgehäuseblock 11 oder Pumpenaggregat angebracht sein.

Nachfolgend wird unter Bezug auf die vorangegangene Beschreibung die Funktion der Bremsanlage angegeben.

Bei Normalbremsung im Bereich kleiner, zulässiger Schlupfwerte gelangt das zum Hauptzylinder 12 in die Hauptdruckleitung 2 eingespeiste Druckmittel fußkraftproportional über das in der Grundstellung geöffnete Einlaßventil 1 zur Vorderradbremse VL. Gleichzeitig steht über den an der Hauptdruckleitung 2 angeschlossenen Bremskraftverteiler 20 und über das weitere Einlaßventil 1 die Hinterradbremse HR unter Druck. Der Druckaufbau in der Hinteradbremse HR erfolgt sodann druckabhängig entsprechend der Bremskraftverteilerkennlinie. Das Druckmittelverschiebeelement 3 bleibt hingegen in der von der Druckfeder 9 bestimmten, gegenüber dem Radbremsanschluß volumenerweiterten Grundstellung, da während der Normalbremsung die Hilfsdruckpumpe 16 deaktiviert ist.

Bei Einleitung der Bremsschlupfregelung, infolge überhöhter Schlupfwerte, erfolgt das Schalten der Druckmodulationsventile 1,6 auf bekannte Weise im Sinne der Druckhalte-, Druckabbau- und Druckaufbauphasen, jedoch mit dem Unterschied, daß mit dem Anlauf der Hilfsdruckpumpe 16 auch gleichzeitig das im Druckmittelverschiebeelement 3 befindliche Volumen durch den Kolben zur Hinterradbremse HR verdrängt wird. Das Druckmittelverschiebeelement 3 ist sodann der Wirkung des Bremskraftverteilers 20 überlagert, so daß im ABS-Fall der Bremskraftverteiler 20 überbrückt ist. Dies hat den Vorteil, daß bei entsprechender Dimensionierung des Druckmittelverschiebeelementes 3, beispielsweise durch Verwendung eines abgestuften Füllkolbens, der Hinterradbremsdruck den Vorderradbremsdruck übersteigen kann, um bei ABS-Betrieb kürzere Bremswege mit optimaler Haftwertausnutzung und geringsten Pedalkräften realisieren zu können. Als weiterer positiver Effekt der Erfindung erweist sich das erheblich verminderte ABS-Regelgeräusch. Insbesondere die Druckpulsationen seitens der Hilfsdruckpumpe 16 werden durch die hydraulische Verbindung zwischen der Hinterradbremse HR und der volumenerweiterten- bzw. volumenkomprimierenden Wirkung des Druckmittelverschiebeelementes gedämpft. Da außerdem das während der Schlupfregelung aus der Vorderradbremse VL abgelassene Volumen über das Druckmittelverschiebeelement in Richtung der Hinterradbremse HR verdrängt bzw. umgeschichtet wird, bleibt das Bremspedal von starken Druckpulsationen verschont.

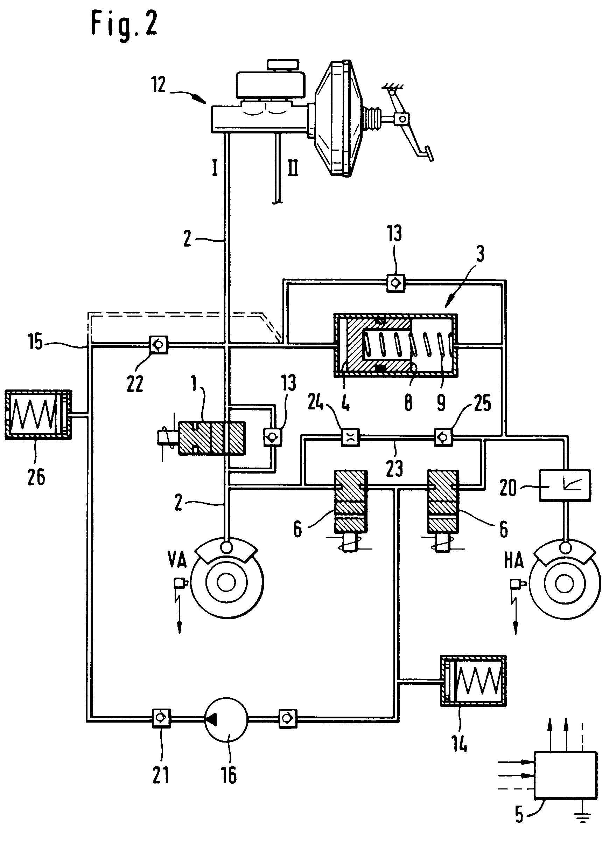

Die Fig. 2 zeigt zur überschaubaren Darstellung lediglich einen Bremskreis in einer Diagonalaufteilung für eine blockiergeschützte Bremsanlage. Die in ihrer Funktion als Einlaß- und Auslaßventile der Vorderradbremse VA vorgeschalteten beiden Druckmodulationsventile 1 sowie auch die den Auslaßventilen 6 der Vorderrad-/Hinterachsbremse VA,HA nachgeschaltete Hilfsdruckpumpe 16 und das Reservoir 14 entsprechen im wesentlichen der Ausführung gemäß Fig. 1. Abweichend von Fig. 1 befindet sich der Bremskraftverteiler 20 gegenüber dem Druckmittelverschiebeelement 3 in Reiheschaltung. Der Bremskraftverteiler 20 ist in einem zwischen den Druckmodulationsventilen 1,6 der Vorderradbremse VA eingeschlossenen Schaltungspfad 23 integriert. Der Schaltungspfad 23 weist eine Drossel 24 und ein in Richtung der Vorderradbremse VA sperrendes Rückschlagventil 25 auf, die beide dem der Hinterradbremse HA zugeordneten Bremskraftverteiler 20 in Reihe vorgeschaltet sind. Das Rückschlagventil 25 verhindert während der ABS-Regelung ein Entweichen des vom Druckmittelverschiebeelementes 3 in Richtung des Bremskraftverteilers 20 verdrängten Druckmittelvolumens zur Vorderradbremse VA. Der in Richtung der Hinterradbremse HA wirksame Anschluß des Druckmittelverschiebeelementes 3, mündet dementsprechend zwischen dem Bremskraftverteiler 20 und dem Rückschlagventil 25 in der Schaltungspfad 23 ein. Die in Reihe zum Rückschlagventil 25 vorgeschaltete Drossel 24 kalibriert das von der Vorderradbremse VA zum Bremskraftverteiler 20 strömende Druckmittelvolumen. Durch die vorbeschriebene Schaltungsanordnung ist es möglich, unter bestmöglicher Ausschöpfung der Haftbeiwerte und damit zum Zwecke der Bremswegverkürzung, den Hinterradbremsdruck über das Druckniveau der Vorderachsbremse anzuheben. Für die gewünschte optimale Druckerhöhung an der Hinterachse während der ABS-Regelung, ist die Größe des zur Hinterachsbremse verdrängbaren Füllvolumens mittels des Druckmittelverschiebeelement 3 entscheidend. Diesbezüglich ist der Kolbenhub und der Kolbendurchmesser des Verdrängerkolbens entsprechend zu dimensionieren. Ein weiterer Vorteil der beschriebenen Schaltungsanordnung begründet sich durch die Verminderung der Ventilanzahl, da jeweils die Anordnung eines der Hinterradbremse HA normalerweise zugehörigen, als Einlaßventil wirksamen Druckmodulationventils entfallen kann. Der dem Bremskraftverteiler 20 abgewandte Druckanschluß des Druckmittelverschiebeelementes 3 ist entweder direkt an der Hauptdruckleitung 2 oder wie in Fig. 1 zuvor beschrieben, an der Pumpendruckseite angeschlossen. Zum schnellen manuellen Lösen der Hinterradbremse HA befindet sich parallel zur Leitungsverbindung des Hauptzylinders 12 mit der Hinterradbremse HA ein in Richtung des Hauptzylinders öffnendes Rückschlagventil 13. Zur Gewährleistung der Funktionsfähigkeit eines mit Manschettendichtungen versehenen Hauptzylinders 12 ist an der Druckseite der Hilfsdruckpumpe 16 ein Druckmittelspeicher 26 angeschlossen.

### Funktionsweise der Anlage:

In der Normalbremsstellung gelangt fußkraftproportional in die Hauptdruckleitung 2 eingespeistes Druckmittel über das offene Druckmodulationsventil 1 zur Vorderradbremse VA und über die Drossel 24 und das Rückschlagventil 25 zum Bremskraftverteiler 20, der entsprechend seiner Auslegung den Bremsdruck der Hinterradbremse HA bestimmt. Das Druckmittelverschiebeelement 3, die Hilfsdruckversorgung sowie die geschlossenen Druckmodulationsventile 6 sind nicht aktiviert.

Mit dem Einsetzen der Bremsschlupfregelung (ABS) läuft die Hilfsdruckpumpe 16 an und fördert das im Reservoir 14, bzw. das über die elektromagnetisch offenen geschalteten Druckmodulationsventile 6 (Auslaßventile) kommende Druckmittelvolumen der Radbremsen in Richtung des Druckmittelverschiebeelementes 3, das unabhängig vom Regelzustand der Vorderradbremse VA Druckmittel zum Bremskraftverteiler 20 und damit zur Hinterradbremse HA verdrängt. Der Bremsdruck in der Hinterradbremse HA wird in Abhängigkeit von den von einer Steuer- und Regelelektronik 5 ausgehenden Schlupfsignale mittels Betätigung des der Hinterradbremse HA zugehörigen Druckmodulationsventil 6 (Auslaßventil) bestimmt.

Ein weiterer Vorteil der erfindungsgemäßen Schaltung ist darin zu sehen, daß trotz des bei einem Fahrzeug mit Frontantrieb wirksamen Motorschleppmomentes und der damit möglichen Blockierneigung der Vorderräder, ein unabhängiger Druckaufbau in der Hinterradbremse HA möglich ist. Über die bereits zur Fig. 1 erwähnten Vorteile bezüglich der reduzierten Geräusche und Bremswege sowie einer geringeren Pedalpulsation wird auf die reduzierte Zahl der erforderlichen Elektromagnetventile verwiesen. Bei einer blockiergeschützten Kraftfahrzeugbremse mit Vorderrad-/Hinterradbremskreisaufteilung vermindert sich der Ventilbedarf auf sechs Stück.

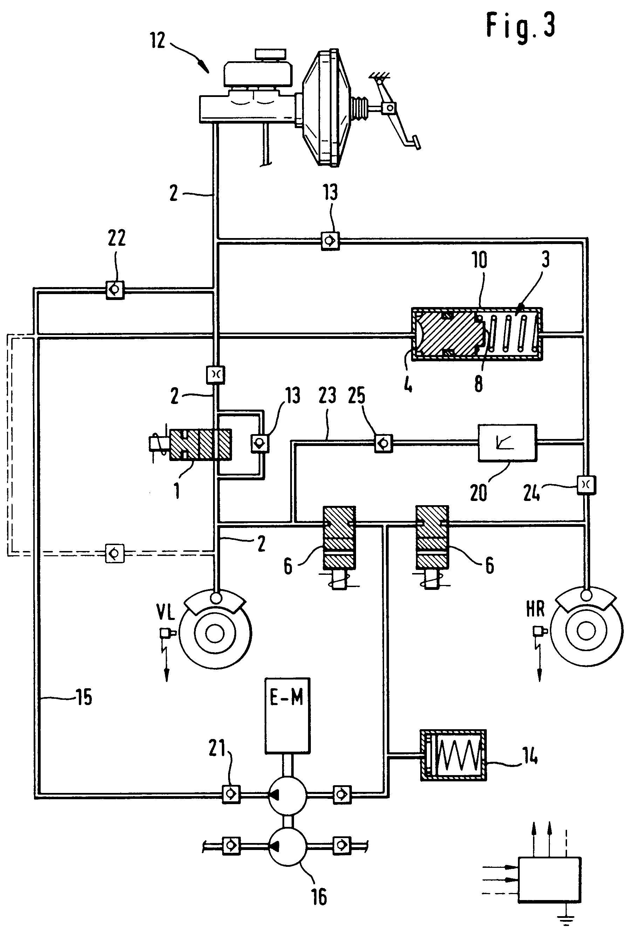

Die Fig. 3 zeigt eine blockiergeschützte Bremsanlage in Diagonalkreisaufteilung. Zur Veranschaulichung der Erfindung ist exemplarisch jedoch nur eine Diagonale gezeigt. Der Bremskraftverteiler 20 und das Druckmittelverschiebeelement 3 sind zueinander in Parallelschaltung angeordnet. Die stromlos offenen und geschlossenen Druckmodulationsventile 1,6 sind analog zur Darstellung gemäß Fig. 2 den Vorder- und Hinterradbremsen VL,HR zugeordnet. Der an der Vorderradbremse VL angeschlossene Schaltungspfad 23 stellt über ein Rückschlagventil 25, über den Bremskraftverteiler 20, über die Drossel 24 eine hydraulische Bindung zur diagonalen Hinterradbremse HR her. Das Druckmittelverschiebeelement 3 schließt sich mit seinem Volumenspeicher in Reiheschaltung zur Drossel 24 an der diagonalen Hinterradbremse HR an. Der Bremskraftverteiler 20 ist in der gezeigten alternativen Schaltungsanordnung zwischen der Drossel 24 und dem in Richtung der Vorderradbremse VL sperrenden Rückschlagventil 25 in Reihe zugeordnet. Die Schaltung der Hilfsdruckpumpe 16 entspricht der vorangegangenen Ausführung gemäß Fig. 2.

Die bereits aus Fig. 2 bekannte Anordnung des in Richtung der Hilfsdruckpumpe 16 sperrenden Rückschlagventils 22 kann alternativ durch einen Anschluß des Rückschlagventils an die Hauptdruckleitung 2 zwischen dem Druckmodulationsventil 1 (Einlaßventil) und der Vorderradbremse VL geschehen, ohne daß sich hierdurch Nachteile ergeben.
Während der Blockierschutzregelung erfolgt der Druckaufbau an der Hinterradbremse HR über das vom Pumpendruck beaufschlagte Druckmittelverschiebeelement 3, das den Bremskraftverteiler 20 überbrückt. Damit läßt sich bei einer gewissermaßen als 2-Kanal-Antiblockiersystem ausgelegten Bremsanlage eine optimale Haftwertausnutzung während der Schlupfregelung erzielen, wobei durch die aufgezeigten Auslegungskriterien (Verdrängercharakteristik des Druckmittelverschiebeelementes) an der Hinterradbremse HR sich bei Bedarf ein höherer Blockierregeldruck erreichen läßt, als in der Vorderradbremse VL. Überdies ermöglicht der erfindungsgemäße Schaltungsaufbau bei Niedrigreibwerten und bei Vorderradschlupf des Fronttrieblers, infolge des Motorschleppmomentes, einen optimalen Druckaufbau an der Hinterradbremse HR bis zur Blockiergrenze des Rades, vergleichbar mit der Regelgüte eines 3-Kanal-Antiblockiersystems. Ein weiterer Vorteil ergibt sich zu Beginn der Regelung, da das aus der Vorderradbremse VL abgelassene Volumen in die Hinterradbremse und nicht in den Hauptzylinder zurückgefördert wird. Pedalpulsationen sind hierdurch nahezu ausgeschlossen. Zudem ist die Hilfsdruckpumpe optimal gedämpft, da das Druckmittelverschiebeelement vom Hinterradbremsdruck beaufschlagt wird. Ein Erfordernis zur Anordnung eines der Hilfsdruckpumpen 16 nachgeschalteten Dämpfungsspeichers besteht folglich nicht.

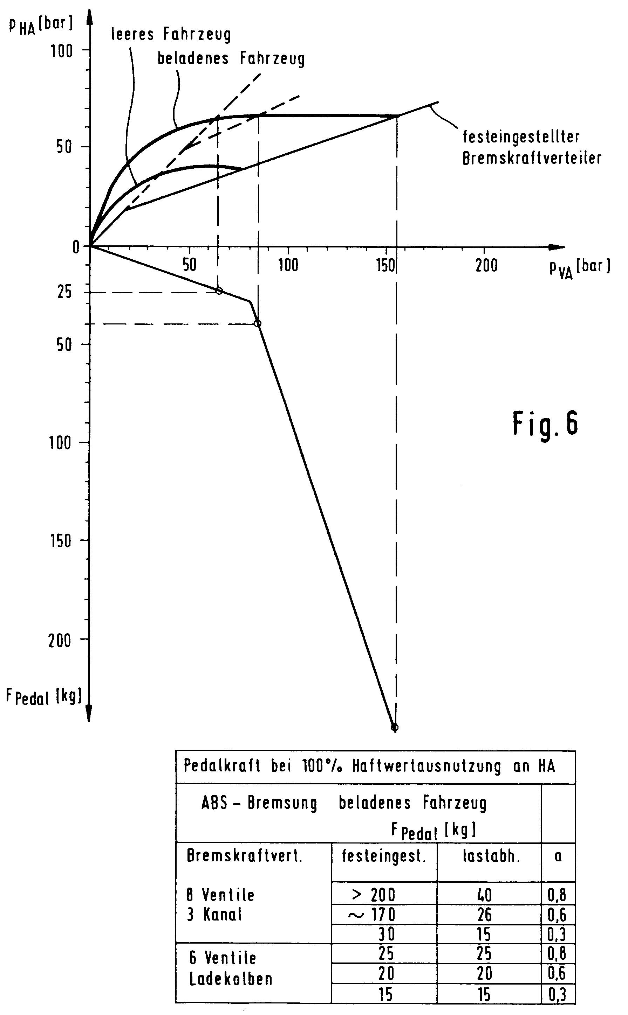

Zusammenfassend und wie sich auch im Nachfolgenden aus Fig. 6 ergibt, wird ein erheblich vereinfachtes Bremssystem geschaffen, das trotz verminderter Ventilanzahl (sechs Druckmodulationsventile) und unter Verzicht auf einen lastabhängigen Bremskraftverteiler eine Leistungscharakteristik vergleichbar mit einem 3-Kanal- bzw. 8-Ventil-Antiblockiersystem aufweist.

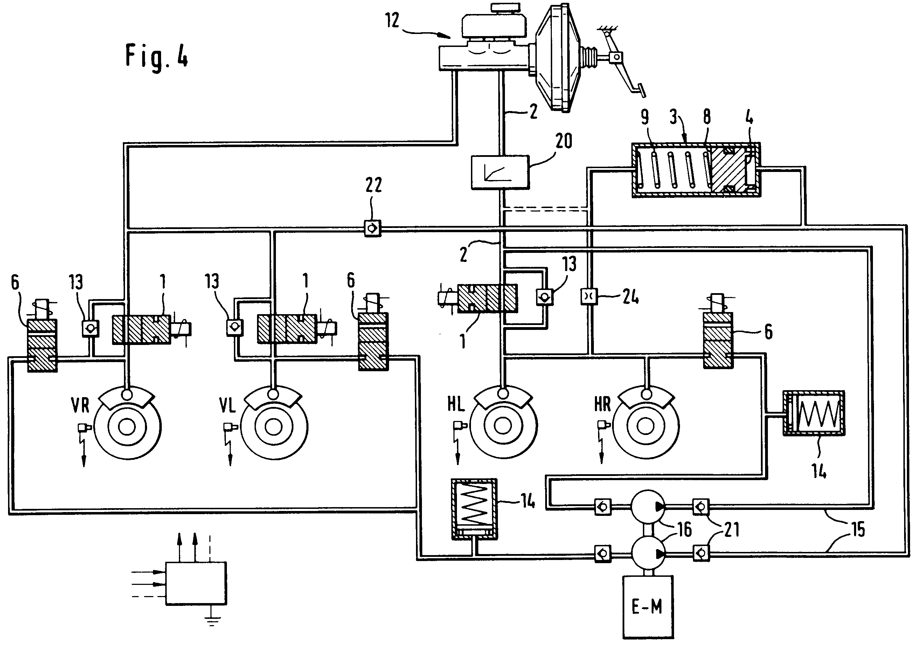

Die Fig. 4 zeigt eine hydraulische Schaltung für eine zweikreisige schlupfgeregelte Bremsanlage in Vorderachs-/Hinterachsbremskreisaufteilung. Der Vorderachsbremskreis weist jeweils ein jeder Radbremse zugeordnetes, als Einlaß- bzw. Auslaßventil wirksames elektromagnetisches Druckmodulationsventil 1,6 auf. An den Auslaßventilen 6 des Vorderachsbremskreises schließt sich ein Reservoir 14 (Niederdruckspeicher) und die Hilfsdruckpumpe 16 an, die das Druckmittelverschiebeelement 3 beaufschlagt und das Druckmittel über ein in die Hilfsdruckleitung 15 eingesetztes Rückschlagventil 22 in Richtung der Vorderachsbremsen VR,VL, bzw. in den Hauptzylinder 12 fördert. Der dem Pumpendruck entgegengelegene Anschluß des Druckmittelverschiebeelementes 3 mündet mit einer Drossel 24 versehen, zwischen dem Einlaß- und dem Auslaßventil in die Hinterachsbremsen HL,HR. Eine weitere Hilfsdruckversorgung besteht über eine zweite Hilfsdruckpumpe 16 zwischen dem Auslaßventil der Hinterachsbremsen und der Hauptdruckleitung 2 des Hinterachsbremskreises. Der Bremskraftverteiler 20 ist zwischen dem Einlaßventil 1 der Hinterachsbremse HR,HL und dem Hauptzylinder 12 in der Hauptdruckleitung 2 positioniert. Das Druckmittelverschiebeelement 3 kann auch zwischen dem Bremskraftverteiler 20 und dem Einlaßventil an der Hauptdruckleitung 2 angeschlossen werden, anstatt zwischen Einlaßventil und Auslaßventil.

Bei einer Normalbremsung gelangt fußkraftproportionaler Bremsdruck über die in der Grundstellung offenen Druckmodulationsventile 1 des ersten Bremskreises zu den Vorderradbremsen VR,VL. Das in die Hilfsdruckleitung 2 des ersten Bremskreises eingesetzte Rückschlagventil 22 verhindert ein Entweichen von Druckmittel in das Druckmittelverschiebeelement 3. Der Druck im Hinterachsbremskreis wird durch die Kennliniencharakteristik des Bremskraftverteilers 20 festgelegt. Alle übrigen Elemente verharren in der abbildungsgemäßen Grundstellung. Zu Beginn der Bremsschlupfregelung laufen die beiden Hilfsdruckpumpen 16 an, wobei das aus den Vorderradbremsen VR,VL über die Auslaßventile 6 abgelassenen Volumen in das Druckmittelverschiebeelement 3 gepumpt wird. Dies hat zur Folge, daß unabhängig von der Schaltstellung des den Hinterradbremsen HR,HL zugehörigen Einlaßventils und des Bremskraftverteilers 20, Druckmittelvolumen aus dem Druckmittelverschiebeelement zu den Hinterradbremsen verdrängt wird. Hierbei bestimmt das vom Druckmittelverschiebeelement 3 verdrängbare Volumen die maximale Druckerhöhung in den Hinterradbremsen, die bei Bedarf (Niedrigreibwert) im Rahmen der ABS-Druckmodulation durch Schalten des Einlaßventils und Auslaßventils abgesenkt werden kann.

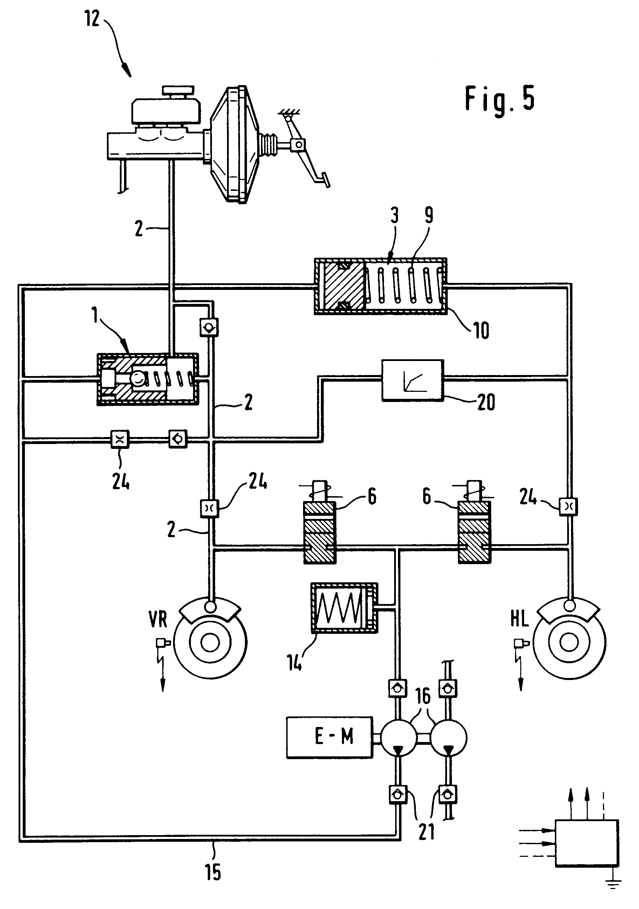

Eine weitere vorteilhafte Anordnung des Erfindungsgegenstandes zur blockiergeschützten Bremsanlage mit diagonaler Bremskreisaufteilung geht aus Fig. 5 hervor. Zur Verbesserung der Überschaubarkeit der Erfindung ist hierzu exemplarisch lediglich die Bremskreisdiagonale zwischen der rechten Vorderradbremse VR und der linken Hinterradbremse HL gezeigt. Der an der Hinterradbremse HL angeschlossene Verdrängerraum des Druckmittelverschiebeelementes 3 nimmt - wie bei allen anderen aufgezeigten Ausführungsbeispielen - die den Verdrängerkolben in Grundstellung positionierende Druckfeder 9 auf. Diesem gegenüber gelegen, befindet sich die vom Pumpendruck beaufschlagte Stirnfläche des Verdrängerkolbens. Die Hilfsdruckpumpe 16 entnimmt während der ABS-Regelung das von den beiden Diagonalradbremsen VR,HL über die offenen Auslaßventile 6 im Reservoir 14 zwischengespeicherte Druckmittelvolumen und fördert dieses über einen mit einer Drossel 24 versehenen Leitungspfad zum an der Radbremse HL angeschlossenen Bremskraftverteiler 20. Ein Teilstrom des Pumpendrucks beaufschlagt den Kolben eines hydraulisch steuerbaren Druckmodulationsventil 1, das in seiner Grundstellung die Verbindung zwischen dem Hauptzylinder 12 und der angeschlossenen Vorderradbremse VR freigibt. Der Zulauf zu den beiden Radbremsen VR,HL ist jeweils durch Blenden 24 bzw. Drosseln kalibriert. Das hydraulische Druckmodulationsventil 1 hat die Aufgabe, während der ABS-Regelung den Hauptzylinder 12 von den Radbremsen VR,HL abzutrennen, so daß Pedalpulsationen vermieden werden. Im Falle der ABS-Regelung ist die Wirkung des Bremskraftverteilers 20 von der des Druckmittelverschiebeelementes 3 überlagert, so daß bei entsprechender Auslegung des Druckmittelverschiebeelementes der Hinterradbremsdruck den Vorderradbremsdruck übersteigt, solange das der Hinterradbremse HL zugeordnete Auslaßventil 6 sich öffnet, um die Druckabbauphase einzuleiten.

Dieses Hydraulikkonzept zeichnet sich über die bereits in den vorangegangenen Figuren erläuterten Vorteile durch einen Minimalbedarf an elektromagnetisch zu steuernden Druckmodulationsventile aus, wonach für die komplette Bremsanlage eines vierrädrigen Kraftfahrzeugs lediglich vier Elektromagnete erforderlich sind.

Die Fig. 6 zeigt einen beispielhaften Vergleich eines gemaß dem Stand der Technik gebräuchlichen 3-Kanal-Antiblockiersystems (acht Druckmodulationsventile), gegenüber dem erfindungsgemäßen Antiblockiersystem mit sechs Druckmodulationsventilen und Ladekolben, wie dies in Fig. 3 beschrieben ist. Hierzu wird - unter der Voraussetzung gleicher Abbremsung a - die erforderliche Pedalkraft Fp abhängig von der Verwendung eines fest eingestellten oder lastabhängigen Bremskraftverteilers für ein beladenes Fahrzeug dargestellt. Aus der tabellarischen wie auch graphischen Darstellung folgt, daß im ABS-Fall unabhängig von der Verwendung eines fest eingestellten oder lastabhängigen Bremskraftverteilers und durch die Überbrückung des Bremskraftverteilers mittels Druckmittelverschiebeelement und durch den Ladekolben proportional und zudem relativ kleine Pedalkräfte bei gleicher Bremsverzögerung und unter der Annahme 100%iger Haftwertausnutzung an der Hinterachse erzielt werden können, so daß durch die Erfindung auf die Notwendigkeit eines lastabhängigen Bremskraftverteilers verzichtet werden kann, ohne u.a. eine Pedalkrafterhöhung akzeptieren zu müssen.

Es wird darauf hingewiesen, daß im Diagramm gemäß Fig. 6 entlang der Ordinatenskala der Hinterachsbremsdruck pHA und die erforderliche Pedalkraft Fp aufgetragen sind. Entlang der Abszisse sind die Bremsdruckwerte der Vorderachse pVA dargestellt. Kennlinien für den fest eingestellten bzw. lastabhängigen Bremskraftverteiler sind hinsichtlich ihres Zustandekommens dem Stand der Technik entnommen, weshalb an dieser Stelle lediglich auf die einschlägige Fachliteratur, z.B. Dr. Ing. Hans Strien, "Auslegungen und Berechnungen von PKW-Bremsanlagen" Herstellung: ALFRED TEVES GMBH, 6000 Frankfurt/Main, verwiesen wird.

### Bezugzeichenliste

- 1: Druckmodulationsventil (Einlaßventil)
- 2: Hauptdruckleitung
- 3: Druckmittelverschiebeelement
- 4: erste Stirnfläche
- 5: Steuer- und Regelelektronik
- 6: Druckmodulationsventil (Auslaßventil)
- 8: zweite Stirnfläche
- 9: Druckfeder
- 10: Gehäuse
- 11: Ventilgehäuseblock
- 12: Hauptzylinder
- 13: Rückschlagventil
- 14: Reservoir
- 15: Hilfsdruckleitung
- 16: Hilfsdruckpumpe
- 20: Bremskraftverteiler
- 21: Druckventil
- 22: Rückschlagventil
- 23: Schaltungspfad
- 24: Drossel/Blende
- 25: Rückschlagventil
- 26: Druckmittelspeicher
- VL: Vorderradbremse, links
- VR: Vorderradbremse, rechts
- HR: Hinterradbremse, rechts
- HL: Hinterradbremse, links
- VA: Vorderradbremse
- HA: Hinterradbremse
- a: Abbremsung
- pHA: Hinterachsbremsdruck
- pVA: Vorderachsbremsdruck
- Fp: Pedalkraft

## Patentansprüche

1. Hydraulische Bremsanlage mit Schlupfregelung, mit einem pedalbetätigbaren, vorzugsweise hilfskraftunterstützten Hauptzylinder (12), an dem zumindest über eine Hauptdruckleitung (2) eine Vorder- und Hinterradbremse (VA, HA) eines Kraftfahrzeuges angeschlossen sind, mit einer an einer Hilfsdruckleitung (15) angeschlossenen hydraulischen Hilfsdruckpumpe (16), die Druckmittel aus einem Reservoir (14) entnimmt und dieses den Radbremsen (VA, HA) zuführt, sowie mit Radsensoren und einer Steuer- und Regelelektronik (5) zur Ermittlung des Raddrehverhaltens und zur Erzeugung von elektrischen Bremsdrucksteuersignalen, mit Druckmodulationsventilen (1, 6) zur Bremsdruckregelung an den Radbremsen (VA, HA), dadurch **gekennzeichnet,** daß an der zur Hinterradbremse (HA) führenden Hauptdruckleitung (2) ein in einem Gehäuse (10) abgedichteter und axial beweglicher Kolben eines Druckmittelverschiebeelementes (3) angeordnet ist, der auf einer ersten Stirnfläche (4) vom Druck der Hilfsdruckpumpe (16) beaufschlagbar ist, daß auf einer entgegengesetzt zur ersten Stirnfläche (4) gelegenen zweiten Stirnfläche (8) der in der Hinterradbremse (HA) herrschende Druck anlegbar ist, daß der Kolben des Druckmittelverschiebeelementes (3) eine in Richtung zur Hinterradbremse (HA) volumenvergrößernde Grundstellung im Gehäuse (10) aufweist, daß abhängig vom Hub und Nenndurchmesser der zweiten Stirnfläche (8) am Kolben bei aktiver Hilfsdruckpumpe (16) während der Schlupfregelung ein Druckmittelvolumen verdrängt wird, das dem zur schlupffreien Abbremsung der Hinterradbremse (HA) erforderlichen Radbremsdruck entspricht, und daß bei unbetätigten Druckmodulationsventilen (1, 6) eine offene Verbindung zwischen dem Hauptzylinder (12) und den Radbremsen (VA, HA) besteht.

2. Hydraulische Bremsanlage nach Anspruch 1, dadurch **gekennzeichnet,** daß stromaufwärts vor einem in der Grundstellung elektromagnetisch stromlos geöffneten Druckmodulationsventil der Hinterradbremse (HA) das Druckmittelverschiebeelement (3) an der Hilfsdruckleitung (15) angeschlossen ist.

3. Hydraulische Bremsanlage nach Anspruch 1 oder 2, dadurch **gekennzeichnet,** daß das Druckmittelverschiebeelement (3) in der Bremsdruckregelphase einen zwischen der Hinterradbremse (HA) und dem Hauptzylinder (12) angeordneten Bremskraftverteiler (20) hydraulisch zu überbrücken vermag, und daß der Bremskraftverteiler (20) parallel zum Druckmittelverschiebeelement (3) angeordnet ist.

4. Hydraulische Bremsanlage nach einem der vorhergehenden Ansprüche, dadurch **gekennzeichnet,** daß der Druck der Hilfsdruckpumpe (16), der die erste Stirnfläche (4) des Druckmittelverschiebeelementes (3) beaufschlagt, zwischen einem Druckventil (21) der Hilfsdruckpumpe (16) und einem in die Hilfsdruckleitung (15) hineingesetzten, in Richtung der Hilfsdruckpumpe (16) sperrenden Rückschlagventil (22) entnehmbar ist.

5. Hydraulische Bremsanlage nach mindestens einem der vorhergehenden Ansprüche 1 bis 4, dadurch **gekennzeichnet,** daß ein durch das Druckmittelverschiebeelement (3) hydraulisch überbrückbare Bremskraftverteiler (20) in Reiheschaltung zwischen dem der Hinterradbremse (HR) vorgeschalteten, in der Grundstellung elektromagnetisch geöffneten Druckmodulationsventil (1) und dem Hauptzylinder (12) angeordnet ist.

6. Hydraulische Bremsanlage nach Anspruch 1, dadurch **gekennzeichnet,** daß das Druckmittelverschiebeelement (3) zwischen der Hinterradbremse (HA) und dem Hauptzylinder (12) an der Hauptdruckleitung (2) sowie in Reiheschaltung zu einem Bremskraftverteiler (20) angeordnet ist.

7. Hydraulische Bremsanlage nach mindestens einem der vorhergehenden Ansprüche, dadurch **gekennzeichnet,** daß in einer ersten Parallelschaltung zum Druckmittelverschiebeelement (3) ein in Richtung des Hauptzylinders (12) öffnendes Rückschlagventil (13) positioniert ist.

8. Hydraulische Bremsanlage nach Anspruch 6, dadurch **gekennzeichnet,** daß ein weiterer parallel zum Druckmittelverschiebeelement (3) angeordneter und zum Bremskraftverteiler (20) führender hydraulischer Schaltungspfad (23) eine Drossel- oder eine Blende (24) in Reiheschaltung zu einem in Richtung des Bremskraftverteilers (20) öffnenden Rückschlagventils (25) angeordnet ist.

9. Hydraulische Bremsanlage nach Anspruch 8, dadurch **gekennzeichnet,** daß der hydraulische Schaltungspfad (23) zwischen der Vorderradbremse (VA) und dem zur Vorderradbremse (VA) gehörenden, in der Grundstellung elektromagnetisch stromlos geöffneten Druckmodulationsventil (1) angeschlossen ist.

10. Hydraulische Bremsanlage nach Anspruch 4, dadurch **gekennzeichnet,** daß ein Druckmittelspeicher (26) zwischen einem in Richtung der Hilfsdruckpumpe (16) sperrenden Rückschlagventil (22) und dem Druckventil (21) der Hilfsdruckpumpe (16) angeordnet ist.

11. Hydraulische Bremsanlage nach Anspruch 8, dadurch **gekennzeichnet,** daß der Bremskraftverteiler (20) zwischen einer der Hinterradbremsen (HA) vorgeschalteten Drossel- oder Blende (24) und dem in Richtung des Bremskraftverteilers (20) öffnenden Rückschlagventil (25) im Schaltungspfad (23) integriert ist.

12. Hydraulische Bremsanlage nach Anspruch 1, dadurch **gekennzeichnet,** daß das Druckmittelverschiebeelement (3) zwischen dem der Hinterradbremse (HL) zugehörigen, in der Grundstellung elektromagnetisch stromlos geöffneten Druckmodulationsventil (1) und der mit der Vorderradbremse (VA) in Verbindung stehenden Druckseite der Hilfsdruckpumpe (16) angeschlossen ist und daß ein Bremskraftverteiler (20) zwischen dem Hauptzylinder (12) und dem in Grundstellung elektromagnetisch stromlos geöffneten Druckmodulationsventil (1) der Hinterradbremse (HL) in die Hauptdruckleitung (2) eingeschaltet ist.

13. Hydraulische Bremsanlage nach Anspruch 1, dadurch **gekennzeichnet,** daß das zwischen der Vorderradbremse (VR) und dem Hauptzylinder (12) angeordnete Druckmodulationsventil (1) vom Druck der Hilfsdruckpumpe (16) in eine den Hauptzylinder (12) von der Vorderradbremse (VR) trennende Schaltstellung umsteuerbar ist und daß eine gedrosselte, zwischen dem an die Hauptdruckleitung (2) angeschlossenen Druckmodulationsventil (1) und der Vorderradbremse (VR) einmündende Druckmittelverbindung an der Druckseite der Hilfsdruckpumpe (16) angeschlossen ist.

14. Hydraulische Bremsanlage nach Anspruch 13, dadurch **gekennzeichnet,** daß der Vorderradbremse (VR) eine Drossel oder Blende (24) vorgeschaltet ist.

15. Hydraulische Bremsanlage nach Anspruch 14, dadurch **gekennzeichnet,** daß das Gehäuse (10) des Druckmittelverschiebeelementes (3) integraler Bestandteil eines die Druckmodulationsventile (1, 6) aufnehmenden Ventilgehäuseblocks (11) ist.

16. Hydraulische Bremsanlage nach Anspruch 1, dadurch **gekennzeichnet,** daß der Kolben des Druckmittelverschiebeelements (3) als ein im Gehäuse (10) abgedichteter Stufenkolben ausgebildet ist, dessen mit kleinerem Nenndurchmesser versehene zweite Stirnfläche (8) vom Druck der Hinterradbremse (HA) und die größere erste Stirnfläche (4) vom Druck der Hilfsdruckpumpe (16) beaufschlagbar ist.

## Claims

1. A hydraulic brake system with slip control, including a pedal-operable master cylinder (12), preferably assisted by auxiliary force, to which a front-wheel and a rear-wheel brake (VA, HA) of an automotive vehicle are connected at least by way of a main pressure line (2), including a hydraulic auxiliary-pressure pump (16) which is connected to an auxiliary-pressure line (15) and takes in pressure medium from a reservoir (14) and supplies it to the wheel brakes (VA, HA), and including wheel sensors and a controlling and regulating electronic unit (5) to determine the wheel rotational behaviour and to generate electric braking pressure control signals, and pressure modulation valves (1, 6) for braking pressure control on the wheel brakes (VA, HA),
**characterised** in that a piston of a pressure-medium displacing element (3), which piston is sealed and axially movable in a housing (10), is connected to the main pressure line (2) leading to the rear-wheel brake (HA), the pressure of the auxiliary-pressure pump (16) being adapted to be applied to a first end surface (4) of the piston, and in that the pressure prevailing in the rear-wheel brake (HA) is adapted to be applied to a second end surface (8) which is arranged opposite to the first end surface (4), in that the piston of the pressure-medium displacing element (3) has an initial position in the housing (10 which increases the medium volume in the direction of the rear-wheel brake (HA), in that, in dependence on the stroke and the nominal diameter of the second end surface (8) on the piston, a pressure medium volume, which corresponds to the wheel braking pressure necessary for the slip-free application of the rear-wheel brake (HA), is displaced during slip control, when the auxiliary-pressure pump (16) is operative, and in that an open connection exists between the master cylinder (12) and the wheel brakes (VA, HA) when the pressure modulation valves (1, 6) are not operated.

2. A hydraulic brake system as claimed in claim 1,
**characterised** in that the pressure-medium displacing element (3) is connected to the auxiliary-pressure line (15) upstream of a pressure modulation valve of the rear-wheel brake (HA) which is open in its electromagnetically deenergized, initial position.

3. A hydraulic brake system as claimed in claim 1 or 2,
**characterised** in that the pressure-medium displacing element (3) in the braking-pressure control mode is capable of hydraulically bridging a brake force distributor (20), arranged between the rear-wheel brake (HA) and the master cylinder (12), and in that the brake force distributor (20) is arranged in parallel to the pressure-medium displacing element (3).

4. A hydraulic brake system as claimed in any one of the preceding claims,
**characterised** in that the pressure of the auxiliary-pressure pump (16), which acts upon the first end surface (4) of the pressure-medium displacing element (3), can be taken between a pressure valve (21) of the auxiliary-pressure pump (16) and a non-return valve (22) inserted into the auxiliary-pressure line (15) and closing in the direction of the auxiliary-pressure pump (16).

5. A hydraulic brake system as claimed in at least one of the preceding claims 1 to 4,
**characterised** in that a brake force distributor (20), which can be bridged hydraulically by the pressure-medium displacing element (3), is arranged in series between the pressure modulation valve (1), which is electromagnetically open in its initial position and connected upstream of the rear-wheel brake (HR), and the master cylinder (12).

6. A hydraulic brake system as claimed in claim 1,
**characterised** in that the pressure-medium displacing element (3) is connected to the main pressure line (2) between the rear-wheel brake (HA) and the master cylinder (12) and is in series arrangement with a brake force distributor (20).

7. A hydraulic brake system as claimed in at least one of the preceding claims,
**characterised** in that a non-return valve (13) opening in the direction of the master cylinder (12) is positioned in a first parallel arrangement to the pressure-medium displacing element (3).

8. A hydraulic brake system as claimed in claim 6,
**characterised** in that another hydraulic circuit path (23), which is arranged in parallel to the pressure-medium displacing element (3) and leads to the brake force distributor (20), includes a throttle or restrictor (24) in series arrangement to a non-return valve (25) opening in the direction of the brake force distributor (20).

9. A hydraulic brake system as claimed in claim 8,
**characterised** in that the hydraulic circuit path (23) is connected between the front-wheel brake (VA) and the pressure modulation valve (1), which is associated with the front-wheel brake (VA) and is electromagnetically open in its deenergized, initial position.

10. A hydraulic brake system as claimed in claim 4,
**characterised** in that a pressure medium accumulator (26) is arranged between a non-return valve (22), which closes in the direction of the auxiliary-pressure pump (16), and the pressure valve (21) of the auxiliary-pressure pump (16).

11. A hydraulic brake system as claimed in claim 8,
**characterised** in that the brake force distributor (20) is integrated in the circuit path (23) between a throttle or restrictor (24), which is connected upstream of the rear-wheel brakes (HA), and the non-return valve (25) opening in the direction of the brake force distributor (20).

12. A hydraulic brake system as claimed in claim 1,
**characterised** in that the pressure-medium displacing element (3) is connected between the pressure modulation valve (1), which is open in its electromagnetically deenergized, initial position and is associated with the rear-wheel brake (HL), and the pressure side of the auxiliary-pressure pump (16) communicating with the front-wheel brake (VA), and in that a brake force distributor (20) is inserted into the main pressure line (2) between the master cylinder (12) and the pressure modulation valve (1) of the rear-wheel brake (HL), which is open in its electromagnetically deenergized, initial position.

13. A hydraulic brake system as claimed in claim 1,
**characterised** in that the pressure modulation valve (1), interposed between the front-wheel brake (VR) and the master cylinder (12), can be switched over by the pressure of the auxiliary-pressure pump (16) into an operating position disconnecting the master cylinder (12) from the front-wheel brake (VR), and in that a restricted pressure medium connection, which terminates between the pressure modulation valve (1) interposed in the main pressure line (2) and the front wheel brake (VR), is connected to the pressure side of the auxiliary-pressure pump (16).

14. A hydraulic brake system as claimed in claim 13,
**characterised** in that a throttle or restrictor (24) is connected upstream of the front-wheel brake (VR).

15. A hydraulic brake system as claimed in claim 14,
**characterised** in that the housing (10) of the pressure-medium displacing element (3) is an integral part of a valve housing block (11) accommodating the pressure modulation valves (1, 6).

16. A hydraulic brake system as claimed in claim 1,
**characterised** in that the piston of the pressure-medium displacing element (3) is designed as a stepped piston which is sealed in the housing (10), the second piston end surface (8) having a small nominal diameter adapted to be acted upon by the pressure of the rear-wheel brake (HA), and the larger first piston end surface (4) is adapted to be acted upon by the pressure of the auxiliary-pressure pump (16).

## Revendications

1. Système hydraulique de freinage à régulation du glissement, comprenant un maître-cylindre (12), qui est agencé de façon à pouvoir être actionné au moyen d'une pédale et comporte de préférence une amplification par une force auxiliaire et auquel sont raccordés, par l'intermédiaire d'une conduite de pression principale (2), au moins un frein de roue avant (VA) et un frein de roue arrière (HA) d'un véhicule automobile, une pompe hydraulique de pression auxiliaire (16), qui est raccordée à une conduite de pression auxiliaire (15) et qui prélève de l'agent de pression dans un réservoir (14) et envoie cet agent de pression aux freins de roue (VA, HA), des capteurs de roue et un circuit électronique de commande et de régulation (5), qui servent à relever le comportement des roues en rotation et à produire des signaux électriques de commande de pression de freinage, et des valves de modulation de pression (1, 6) servant à la régulation de la pression de freinage sur les freins de roue (VA, HA), caractérisé en ce qu'un piston d'un élément de déplacement d'agent de pression (3) est disposé sur la conduite de pression principale (2) menant au frein de roue arrière (HA), ce piston étant disposé d'une manière étanche et mobile axialement dans un boîtier (10) et une première surface frontale (4) de ce piston étant agencée de façon à pouvoir être soumise à l'action de la pression de la pompe de pression auxiliaire (16), en ce que la pression régnant dans le frein de roue arrière (HA) peut être appliquée sur une seconde surface frontale (8) située du côté opposé à la première surface frontale (4), en ce que le piston de l'élément de déplacement d'agent de pression (3) présente une position de base dans le boîtier (10) qui accroît le volume en direction du frein de roue arrière (HA), en ce que, lorsque la pompe de pression auxiliaire (16) est active pendant la régulation du glissement, un volume d'agent de pression est refoulé en fonction de la course et du diamètre nominal de la seconde surface frontale (8) prévue sur le piston, ce volume d'agent de pression correspondant à la pression de frein de roue nécessaire pour le freinage sans glissement du frein de roue arrière (HA), et en ce que, lorsque les valves de modulation de pression (1, 6) ne sont pas actionnées, il existe une liaison ouverte entre le maître-cylindre (12) et les freins de roue (VA, HA).

2. Système hydraulique de freinage selon la revendication 1, caractérisé en ce que l'élément de déplacement d'agent de pression (3) est raccordé à la conduite de pression auxiliaire (15) en amont d'une valve de modulation de pression du frein de roue arrière (HA) qui est à commande électromagnétique et est ouverte en l'absence de courant dans sa position de base.

3. Système hydraulique de freinage selon la revendication 1 ou 2, caractérisé en ce que, dans la phase de régulation de pression de freinage, l'élément de déplacement d'agent de pression (3) peut prendre le pas sur le plan hydraulique sur un dispositif de répartition de force de freinage (20) disposé entre le frein de roue arrière (HA) et le maître-cylindre (12) et en ce que le dispositif de répartition de force de freinage (20) est disposé en parallèle vis-à-vis de l'élément de déplacement d'agent de pression (3).

4. Système hydraulique de freinage selon l'une des revendications précédentes, caractérisé en ce que la pression de la pompe de pression auxiliaire (16), qui exerce son action sur la première surface frontale (4) de l'élément de déplacement d'agent de pression (3), peut être prélevée entre une valve de refoulement (21) de la pompe de pression auxiliaire (16) et une valve antiretour (22) qui est insérée dans la conduite de pression auxiliaire (15) et qui bloque en direction de la pompe de pression auxiliaire (16).

5. Système hydraulique de freinage selon au moins l'une des revendications précédentes 1 à 4, caractérisé en ce qu'un dispositif de répartition de force de freinage (20), agencé de façon que l'élément de déplacement d'agent de pression (3) puisse prendre le pas sur lui sur le plan hydraulique, est disposé suivant un montage en série entre la valve de modulation de pression (1) à commande électromagnétique, qui est disposée en amont du frein de roue arrière (HR) et qui est ouverte en position de base, et le maître-cylindre (12).

6. Système hydraulique de freinage selon la revendication 1, caractérisé en ce que l'élément de déplacement d'agent de pression (3) est disposé sur la conduite de pression principale (2) entre le frein de roue arrière (HA) et le maître-cylindre (12), ainsi que suivant un montage en série vis-à-vis du dispositif de répartition de force de freinage (20).

7. Système hydraulique de freinage selon au moins l'une des revendications précédentes, caractérisé en ce qu'une valve anti retour (13) s'ouvrant en direction du maître-cylindre (12) est positionnée dans un premier montage en parallèle vis-à-vis de l'élément de déplacement d'agent de pression (3).

8. Système hydraulique de freinage selon la revendication 6, caractérisé en ce qu'une autre voie de branchement hydraulique (23), qui est disposée en parallèle vis-à-vis de l'élément de déplacement d'agent de pression (3) et mène au dispositif de répartition de force de freinage (20), comporte un organe d'étranglement ou un orifice calibré (24) disposé suivant un montage en série vis-à-vis d'une valve antiretour (25) s'ouvrant en direction du dispositif de répartition de force de freinage (20).

9. Système hydraulique de freinage selon la revendication 8, caractérisé en ce que la voie de branchement hydraulique (23) est raccordée entre le frein de roue avant (VA) et la valve de modulation de pression (1) à commande électromagnétique qui est associée au frein de roue avant (VA) et est ouverte en l'absence de courant dans sa position de base.

10. Système hydraulique de freinage selon la revendication 4, caractérisé en ce qu'un accumulateur d'agent de pression (26) est disposé entre une valve antiretour (22), qui bloque en direction de la pompe de pression auxiliaire (16), et la valve de refoulement (21) de la pompe de pression auxiliaire (16).

11. Système hydraulique de freinage selon la revendication 8, caractérisé en ce que le dispositif de répartition de force de freinage (20) est intégré dans la voie de branchement (23) entre un organe d'étranglement ou orifice calibré (24), disposé en amont des freins de roue arrière (HA), et la valve antiretour (25) qui s'ouvre en direction du dispositif de répartition de force de freinage (20).

12. Système hydraulique de freinage selon la revendication 1, caractérisé en ce que l'élément de déplacement d'agent de pression (3) est raccordé entre la valve de modulation de pression (1) à commande électromagnétique, qui est associée au frein de roue arrière (HL) et est ouverte en l'absence de courant dans sa position de base, et le côté de refoulement de la pompe de pression auxiliaire (16) qui communique avec le frein de roue avant (VA) et en ce qu'un dispositif de répartition de force de freinage (20) est interposé dans la conduite de pression principale (2) entre le maître-cylindre (12) et la valve de modulation de pression (1) du frein de roue arrière (HL) qui est à commande électromagnétique et est ouverte en l'absence de courant dans sa position de base.

13. Système hydraulique de freinage selon la revendication 1, caractérisé en ce que la valve de modulation de pression (1) qui est disposée entre le frein de roue avant (VR) et le maître-cylindre (12) est agencée de façon que la commutation puisse être commandée par la pression de la pompe de pression auxiliaire (16) de manière à passer dans une position de commutation dans laquelle elle isole le maître-cylindre (12) du frein de roue avant (VR) et en ce qu'une liaison d'agent de pression, qui fait l'objet d'un étranglement et qui débouche entre la valve de modulation de pression (1), raccordée à la conduite de pression principale (2), et le frein de roue avant (VR), est raccordée au côté de refoulement de la pompe de pression auxiliaire (16).

14. Système hydraulique de freinage selon la revendication 13, caractérisé en ce qu'un organe d'étranglement ou orifice calibré (24) est disposé en amont du frein de roue avant (VR).

15. Système hydraulique de freinage selon la revendication 14, caractérisé en ce que le boîtier (10) de l'élément de déplacement d'agent de pression (3) fait partie intégrante d'un bloc de boîtier de valves (11) qui contient les valves de modulation de pression (1, 6).

16. Système hydraulique de freinage selon la revendication 1, caractérisé en ce que le piston de l'élément de déplacement d'agent de pression (23) est réalisé sous forme d'un piston étagé qui est disposé d'une manière étanche dans le boîtier (10) et dont la seconde surface frontale (8) présentant le plus petit diamètre nominal peut être soumise à l'action de la pression du frein de roue arrière (HA), tandis que sa première surface frontale (4), plus grande, peut être soumise à l'action de la pression de la pompe de pression auxiliaire (16).
